# EUROPEAN PATENT SPECIFICATION

(11) **EP 2 100 045 B1**
(45) Date of publication and mention of the grant of the patent: **24.10.2012**
(21) Application number: 06842802.8
(22) Date of filing: 22.12.2006
(51) Int. Cl.: F16B 37/06, B62D 21/10, B23P 19/06

(54) **COUPLING ELEMENT FOR CONNECTING ACCESSORIES TO THE CHASSIS OF VEHICLES**
KOPPLUNGSELEMENT ZUR VERBINDUNG VON ZUBEHÖRTEILEN MIT DEM CHASSIS VON FAHRZEUGEN
ÉLÉMENT DE COUPLAGE POUR RACCORDER DES ACCESSOIRES AU CHÂSSIS DE VÉHICULES

(43) Date of publication of application: 16.09.2009
(73) Proprietor: Societa' Bulloneria Europea S.B.E. S.P.A., 34074 Monfalcone (IT); Iveco S.p.A., 10156 Torino (IT)
(72) Inventor: VESCOVINI Alessandro, I-34074 MONFALCONE (GO) (IT); MASTRORILLI Pierluigi, I-10040 RIVALTA DI TORINO (TO) (IT); ABBATANTUONI, Vincenzo, I-10134 Torino (IT)
(74) Representative: Sandri, Sandro
(86) International application number: PCT/IT2006/000871
(87) International publication number: WO 2008/078343

(56) References cited:
- WO-A-02/070907
- CH-A- 492 137
- US-A- 3 687 181
- US-A1- 2002 054 806
- US-A1- 2004 033 119
- US-A1- 2006 078 402

## Description

### TECHNICAL FIELD

This invention concerns a system for connecting accessories to the chassis or frame of vehicles, comprising a coupling element.

More specifically, this invention refers to a system comprising a coupling element, in particular a metal bushing designed to allow rapid and reliable connection of accessories of various kinds to the chassis or frame of a vehicle.

This invention can be mainly applied in the transport mechanical sector.

### BACKGROUND ART

The frame of vehicles and means generally used for transporting objects and/or persons as a rule consists of long sections of sheet metal usually with a quadrangular cross-section, each comprising a pair of C-shaped sections head-welded to each other.

In order to allow the firm fixing of accessories of various kinds to the frame, such as for example forms of suspension or other items, the background art foresees the use of tubular metal elements with no internal threading. In particular, the tubular elements used are as wide as the inner distance between the two inner opposite wings of the C-shaped section to which they must be fixed.

During the frame assembly procedure, the C-shaped profile is generally first provided with two opposite holes with a diameter corresponding to the hole of the tubular element; the latter is then positioned in correspondence with the opposite holes and spot-welded at one or both ends. The C-shaped sections already fitted with coupling bushings are end-welded to each other to form the quadrangular frame.

According to other embodiments known to the background art, the tubular element is welded to a support element which is then welded to the main C-shaped section to form the box-type frame.

Finally, the accessories, for example the vehicle suspension, are fixed by means of a through screw inside the tubular element and in the component support, which is then clamped in place with a nut against the frame.

This configuration and these assembly procedures present a series of problems and disadvantages, essentially due to the numerous welding operations that must be carried out, on one hand to fix the tubular element to the section and on the other to weld the ends of the sections to form the frame structure.

These operations are both time-consuming and expensive, and do not, moreover, allow the application of an additional anchoring point after welding the two elements of the box-type frame together.

It should also be noted that, according to the background art, the use of a quadrangular cross-section closed box frame produced by direct rolling and not by the coupling of C-shaped sections, is extremely difficult, if not impossible, due to the need to weld the tubular elements inside the already formed frame. Moreover, a box section produced by direct rolling would be highly advantageous for use as a frame, as it has a much greater resistance to torsional and axial stress compared to an open section. A box-type section can also be lighter while having the same technical performance.

Document WO-A-02/070907 discloses a press-fitted spacer nut comprising a cylindrical body having a female screw inside thereof. The spacer nut also includes a flange provided at one end of the body. The flange has a flat upper surface and an outer diameter larger than that of the body. The spacer nut further includes a plurality of ribs provided on the underside of the flange and around the outer periphery of the body. The body of the spacer nut is inserted into a hole of a metal base plate supported by a jig and then the upper surface of the spacer nut is pressed by a pressing machine to push the spacer nut into the metal base plate. The flange and the ribs of the spacer nut plastically deform a part of the metal base plate so as to make the part flow into a space between the ribs and into a groove, and the end surface of the spacer nut is brought coplaner with the surface of the metal base plate, whereby the spacer nut is permanently fixed to the metal base plate.

### DESCRIPTION OF THE INVENTION

This invention proposes to provide a system comprising a coupling element or bushing that can overcome the problems and disadvantages described above.

In particular, this invention proposes to provide a coupling element or bushing that can be easily fixed to a box-type frame of a vehicle, advantageously if this frame is produced in a single piece directly by rolling procedure.

This is achieved by means of a system, the features of which are described in claim 1.

The dependent claim describes an advantageous embodiment of the invention.

The coupling element or bushing belonging to the system according to this invention is internally threaded in order to allow easy fixing of accessories of various kinds to the frame of the vehicle.

Externally, the bushing presents one end comprising an area that allows coupling to the box-type section by interference with a smooth surface or with different shapes according to the application, the shims and the materials of the individual application.

In particular, this area can be produced with a special external shape at the end of the bushing (for example polygonal) or, advantageously, by providing this area with appropriate knurling.

The box-type section forming the frame of the vehicle is fitted with a pair of opposite holes, one of which has a diameter corresponding to the inner diameter of the bushing, while the other hole has a diameter corresponding to the outer diameter of the bushing.

The bushing can thus be fixed immediately to the frame.

For safety reasons, the opposite end of the bushing can in this case be welded internally to the frame.

This conformation can be used in conjunction with a box-type frame produced directly by rolling.

It is nevertheless clear that the coupling element or bushing according to this invention can advantageously be used also in conjunction with a frame, for vehicles and means of transport in general, assembled in a traditional way, that is to say consisting of head-welded C-shaped sections, thus avoiding the need to weld at least one of the ends of the bushing to the frame, thereby reducing the frame assembly times and costs.

This invention also makes it possible to easily insert new anchoring points for any optional elements or special set-ups without having to previously fit a tubular element inside the box-type frame.

### DESCRIPTION OF THE DRAWINGS

Other features and advantages of the invention will become clear on reading the description given below as a non-binding example, together with the accompanying drawings in which:
- figure 1 shows a schematic cross-section of a box-type frame for a vehicle on which a coupling element or bushing according to the invention is fixed;
- figure 2 shows a side view of the coupling element or bushing according to the invention; and
- figure 3 shows a schematic cross-section of a detail of the area of the bushing designed to be coupled by interference to the frame of a vehicle.

### DESCRIPTION OF ONE EMBODIMENT OF THE INVENTION

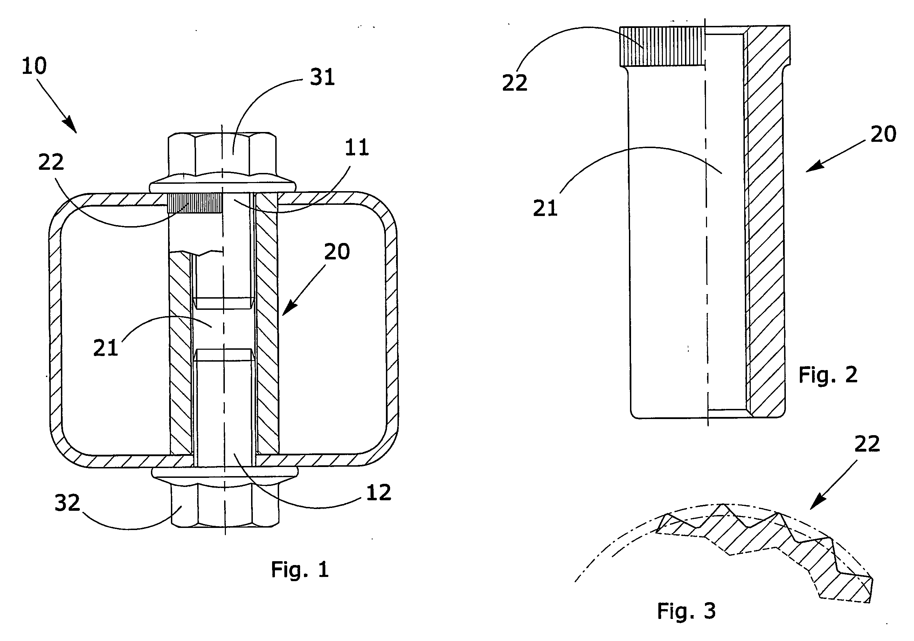

In figure 1, a frame for vehicles and means in general designed for transporting items and/or persons consists of a box-type section 10 generally quadrangular in shape with rounded edges.

In the embodiment described here this is a box-type section produced directly by rolling which makes it possible to obtain excellent mechanical performance, in particular as regards resistance to torsional and axial stress, with respect to known open sections used for the assembly of frames of vehicles and means of transport in general.

The section 10, made from sheet steel with a predetermined thickness, has a first upper hole 11, with a relatively larger diameter, and a second lower hole 12, with a relatively smaller diameter.

A coupling element 20, in particular a steel bushing fitted with a threaded through hole 21 is designed to be attached to the section 10; the outer diameter of this bushing 20 corresponds to the diameter of the upper hole 11 of the section 10, while the diameter of the threaded through hole 21 corresponds to the diameter of the lower hole 12 of the section 10.

According to the invention, the upper end of the bushing 20 presents an area 22 whose diameter is slightly larger than the diameter of the upper hole 11 of the section 10. In the embodiment illustrated in the figures, this area 22 is knurled in order to be coupled, by interference, to the section 10 at the level of the upper hole 11.

In other words, during the assembly of the bushing 20 on the section 10, the bushing is inserted in the hole 11 until its lower end is against the inner surface of the section 10 at the level of the lower hole 12.

The bushing 10 must be forced into position so that the knurled area 22 couples by interference with the section 10. In the final position, the upper end of the bushing 20 is flush with the upper surface of the section 10, while the lower end of the bushing 20 is against the inner surface of the section 10 at the level of the lower hole 12.

Normally, since the coupling by interference of the bushing 20 with the section 10 in the knurled area 22 is very firm, no further welding together of the two elements is necessary.

However, if a totally unmovable coupling is required, the end 22 of the bushing 20 can be welded to the outer surface of the section 10.

Once the interference coupling has been carried out, the accessories can be fitted on the section 10.

In the case shown figure 1, these accessories are a pair of flanged screws 31, 32. Accessories of any type can, however, be connected to the bushing 20.

As can be immediately noted from the above description, the bushing according to this invention allows the use of closed box-type sections for frames of vehicles and means in general for transporting items and/or persons, thus providing numerous advantages from the point of view of mechanical resistance and an economical assembly procedure.

These advantages are essentially due to the fact that it is not necessary to carry out the welding operations foreseen by the known technique, these welding operations being merely optional.

Furthermore, it is not necessary to provide bushings for the fitting of any additional or optional elements.

The invention is described above with reference to a preferred embodiment. It is nevertheless clear that the invention is susceptible to numerous variations within the scope of the attached claims.

In particular, the knurled area 22 foreseen in the bushing 20 according to the invention can be replaced with another technical solution designed for interference coupling, for example by providing the area 22 with a polygonal cross-section.

In this latter case, the upper hole 11 of the section is provided with a similar polygon-shaped hole designed to couple by interference with the area 22 of the bushing 20.

## Claims

1. A system for connecting accessories to the chassis or frame (10) of vehicles and means generally used to transport items and/or persons, said system comprising:
a) a frame having a box-type section (10) with a pair of opposed surfaces; and
b) a coupling element (20) to be inserted between said pair of opposed surfaces, having an elongated cylindrical shape and being provided with an axial threaded through hole (21) designed to allow the coupling of various kinds of accessories; wherein:
- said opposed surfaces of said frame comprise a first (11) and a second (12) opposed holes, whereby said first hole (11) has a diameter different from said second hole (12);
- said first hole (11) of said frame has a diameter corresponding to the diameter of said coupling element, and said second hole (12) of said frame has a diameter corresponding to the diameter of said axial threaded through hole (21) of said coupling element (20);
- one end of said coupling element (20) presents an area (22) having a predetermined shape and with a diameter slightly larger than the diameter of the said coupling element in order to provide coupling by interference with said first hole (11) in the surface of the said frame; and
- in the final coupled position the upper end of said coupling element (20) is flush with the upper surface of said box-type section in correspondance of said first hole (11), while the lower end of said coupling element (20) is against the inner surface of said box-type section at the level of said second hole (12).

2. A system according to claim 1, **characterised in that** said area (22) either has a polygonal shape or is knurled.

## Patentansprüche

1. Ein System zum Verbinden von Zubehör an ein Gehäuse oder einen Rahmen (10) von Fahrzeugen und eine Einrichtung, in der Regel verwendet, um Gegenstände und / oder Personen zu befördern, wobei das System umfasst:
a) einen Rahmen mit einem kastenförmigen Abschnitt (10) mit einem Paar von gegenüberliegenden Oberflächen, und
b) ein Kupplungselement (20), zwischen dem Paar von gegenüberliegenden Oberflächen eingefügt, das eine längliche, zylindrische Form aufweist und mit einem axialen Durchgangsloch (21) ausgebildet ist, um die verschiedenen Kopplungsarten der Zubehör zu ermöglichen;
- wobei die gegenüberliegenden Oberflächen der genannten Rahmen ein erstes (11) und ein zweites (12) gegenüberliegendes Loch umfassen, wobei das erste Loch (11) einen anderen Durchmesser besitzt, als das zweite Loch (12);
- wobei das erste Loch (11) des Rahmens einen Durchmesser, entsprechend dem Durchmesser des genannten Koppelungselements hat, und das zweite Loch (12) des Rahmens einen Durchmesser, entsprechend dem Durchmesser des axialen Durchgangslochs Gewinde (21) des Kupplungselements (20) aufweist;
- wobei ein Ende des genannten Koppelungselements (20) eine Fläche (22) mit einer vorgegebenen Form und mit einem Durchmesser geringfügig größer als der Durchmesser der genannten Kopplungselement bildet, um die Kopplung durch Interferenz mit dem ersten Loch (11), in der Oberfläche des genannten Rahmens, bereitzustellen, und
- wobei in der endgültigen Kopplungsstellung das obere Ende des genannten Koppelungselements (20) bündig mit der oberen Fläche des kastenförmigen Abschnitts, in Entsprechung des ersten Lochs (11), ist, während das untere Ende des genannten Koppelungselements (20) gegen die innere Oberfläche des genannten kastenförmigen Abschnitt auf der Ebene des zweiten Lochs (12) gestellt ist.

2. Ein System nach Anspruch 1, **dadurch gekennzeichnet, dass** die Fläche (22) entweder eine polygonale Form besitzt oder gerändelt ist.

## Revendications

1. Système pour raccorder des accessoires au châssis ou cadre (10) de véhicules et de moyens généralement utilisés pour transporter des articles et/ou des personnes, ledit système comprenant :
a) un cadre ayant une section (10) de type boîte dotée d'une paire de surfaces opposées ; et
b) un élément de couplage (20) destiné à être inséré entre ladite paire de surfaces opposées, ayant une forme cylindrique allongée et doté d'un trou traversant fileté axial (21) conçu pour permettre le couplage de divers types d'accessoires ;
- lesdites surfaces opposées dudit cadre comprenant des premier (11) et deuxième (12) trous opposés, ledit premier trou (11) ayant un diamètre différent dudit deuxième trou (12) ;
- ledit premier trou (11) dudit cadre ayant un diamètre correspondant au diamètre dudit élément de couplage, et ledit deuxième trou (22) dudit cadre ayant un diamètre correspondant au diamètre dudit trou traversant fileté axial (21) dudit élément de couplage (20) ;
- une extrémité dudit élément de couplage (20) possédant une zone (22) de forme prédéterminée et d'un diamètre légèrement plus grand que le diamètre dudit élément de couplage afin de réaliser le couplage par engagement avec ledit premier trou (11) dans la surface dudit cadre ; et
- dans la position couplée finale, l'extrémité supérieure dudit élément de couplage (20) est à fleur de la surface supérieure de ladite section de type boîte en correspondance dudit premier trou (11), tandis que l'extrémité inférieure dudit élément de couplage (20) est placée contre la surface intérieure de ladite section de type boîte au niveau dudit deuxième trou (12).

2. Système selon la revendication 1, **caractérisé en ce que** ladite zone (22) a une forme polygonale ou bien est moletée.
